(19) Europäisches Patentamt / European Patent Office / Office européen des brevets

(11) **EP 4 752 835 A1**

(12) **DEMANDE DE BREVET EUROPEEN**

(43) Date de publication:
**03.06.2026 Bulletin 2026/23**

(21) Numéro de dépôt: **24306984.6**

(22) Date de dépôt: **27.11.2024**

(51) Classification Internationale des Brevets (IPC):
***G06T 7/50*** *(2017.01)*

(52) Classification Coopérative des Brevets (CPC):
**G06T 7/50;** G06T 2207/10004; G06T 2207/20084

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(71) Demandeur: **BULL SAS**
**78340 Les Clayes-Sous-Bois (FR)**

(72) Inventeurs:
- **DRUART, Anaïs**
  **38100 Grenoble (FR)**
- **FRAUX, David**
  **38130 Echirolles (FR)**
- **GUEGAN MARAT, Sophie**
  **38420 Revel (FR)**

(74) Mandataire: **IPAZ**
**Parc Les Algorithmes**
**Bâtiment Platon**
**91190 Saint Aubin (FR)**

(54) **PROCÉDÉ D'ESTIMATION DE PROFONDEUR, PROGRAMME D'ORDINATEUR ET DISPOSITIF ASSOCIÉS**

(57) L'invention concerne un procédé d'estimation de profondeur comprenant les étapes :
- fourniture, en entrée d'un modèle d'estimation de profondeur (12), d'une image d'entrée représentative d'une scène, une sortie du modèle d'estimation de profondeur formant une carte de profondeur correspondante ; et
- enregistrement, dans une mémoire (10), de la carte de profondeur obtenue, en association avec l'image d'entrée,
le modèle d'estimation de profondeur (12) ayant été préalablement obtenu par la mise en oeuvre des étapes :

- pour chacun parmi N noeuds locaux, entraînement d'un modèle local (20) respectif, sur la base d'un jeu de données d'entraînement local ($D_1$, $D_N$) respectif comprenant une pluralité d'images locales chacune associée à une carte de profondeur locale respective, un résultat de l'entraînement formant un modèle local entraîné (22) respectif ;
- calcul du modèle d'estimation de profondeur (12) à partir de toute ou partie des modèles locaux entraînés (22).

**Figure 3**

**Figure 4**

## Description

### Domaine technique

La présente invention concerne un procédé d'estimation de profondeur.

L'invention concerne également un programme d'ordinateur et un dispositif mettant en oeuvre un tel procédé.

L'invention s'applique au domaine de l'informatique, et plus précisément de la vision par ordinateur.

### État de la technique

L'estimation de profondeur est la tâche consistant à déterminer la distance entre un objet et un capteur à partir d'images.

La connaissance d'une telle distance est essentielle dans des domaines tels que la robotique, la conduite autonome, la réalité augmentée et la reconstruction d'images. Il s'agit donc d'une tâche cruciale en vision par ordinateur.

Il est connu d'entraîner un modèle d'intelligence artificielle pour réaliser une telle estimation de profondeur.

Néanmoins, les performances des tels modèles d'estimation de profondeur ne donnent pas entière satisfaction.

En effet, les données utilisées pour l'entraînement d'un modèle d'estimation de profondeur sont souvent disponibles en quantité insuffisante, et souffrent généralement d'une qualité peu satisfaisante. Or, l'estimation de profondeur nécessite une grande quantité de données de haute qualité. En outre, de telles données peuvent être coûteuses et difficiles à annoter avec précision.

En outre, la collecte de données pour l'entraînement d'un modèle d'estimation de profondeur est généralement difficile, car lesdites données sont susceptibles de contenir des informations sensibles ou confidentielles.

Enfin, les données utilisées pour l'entraînement d'un modèle d'estimation de profondeur sont généralement représentatives de scènes présentant une faible variabilité et/ou une faible complexité, ce qui est préjudiciable pour les performances du modèle entraîné.

Un but de la présente invention est de remédier à au moins un des inconvénients de l'état de la technique.

Un autre but de l'invention est de proposer un procédé d'estimation de profondeur qui soit plus performant que celui les procédés connus.

### Exposé de l'invention

À cet effet, l'invention concerne un procédé du type précité, mis en oeuvre par ordinateur et comprenant les étapes :

- fourniture, en entrée d'un modèle d'estimation de profondeur, d'une image d'entrée représentative d'une scène d'entrée,
une sortie du modèle d'estimation de profondeur formant une carte de profondeur comprenant, pour chaque pixel de l'image d'entrée, une valeur indicative d'une profondeur, dans la scène d'entrée, du point de la scène d'entrée associé audit pixel ; et
- enregistrement, dans une mémoire, de la carte de profondeur obtenue, en association avec l'image d'entrée, le modèle d'estimation de profondeur ayant été préalablement obtenu par la mise en oeuvre des étapes :

  - pour chacun parmi N noeuds locaux, N étant un entier naturel non nul, entraînement d'un modèle local respectif, sur la base d'un jeu de données d'entraînement local respectif, chaque modèle local étant une copie d'un même modèle d'estimation de profondeur initial,

    chaque jeu de données d'entraînement local comprenant une pluralité de couples d'entraînement, chaque couple d'entraînement comportant :

    • une image locale, représentative d'une scène correspondante ; et
    • une carte de profondeur locale respective, formant une sortie attendue du modèle local pour ladite image locale en tant qu'entrée,
    chaque carte de profondeur locale présentant, pour chaque pixel de l'image locale respective, une valeur indicative d'une profondeur, dans la scène correspondante, du point de ladite scène associé audit pixel,

    un résultat de l'entraînement formant un modèle local entraîné respectif ;

  - calcul du modèle d'estimation de profondeur à partir de toute ou partie des modèles locaux entraînés.

En effet, grâce à l'entraînement des de chaque modèle local au niveau du noeud local correspondant, un transfert des données d'entraînement vers le noeud central est évité, ce qui est favorable à la confidentialité des données. En outre, le recours à une pluralité de jeux de données d'entraînement locaux implique une multitude de sources, et donc une grand variabilité des données utilisées pour l'entraînement des modèles locaux, ce qui est favorable à des performances améliorées du modèle d'estimation de profondeur.

De façon avantageuse, le procédé selon l'invention présente une ou plusieurs des caractéristiques suivantes, prises isolément ou selon toute combinaison techniquement possible :

le modèle d'estimation de profondeur est égal à une moyenne pondérée des modèles locaux entraînés, un coefficient de pondération associé à chaque modèle local entraîné dépendant de la taille du jeu de données d'entraînement local respectif ;

pour chaque noeud local, l'obtention du modèle local entraîné respectif comprend la mise en oeuvre d'une fonction de perte comprenant d'une part, un invariant d'échelle et de décalage ajusté et, d'autre part, une perte de régularisation ;

l'invariant d'échelle et de décalage ajusté vaut :

$$L_I(\delta, \hat{\delta}) = \sum_{j=1}^{U_M} \left| \delta_j - \hat{\delta_j} \right|$$

avec :

$$\forall j \in [\![1, M]\!], \left| \delta_j - \hat{\delta_j} \right| < \left| \delta_{j+1} - \widehat{\delta_{j+1}} \right|$$

$$U_M = E(\rho M)$$

$$\delta = \frac{d}{\max(\max(d), \varepsilon)}$$

$$\hat{\delta} = \frac{\hat{d}}{\max(\max(\hat{d}), \varepsilon)}$$

où :

$L_I$ est l'invariant d'échelle et de décalage ajusté ;
$d$ est la carte de profondeur locale ;
$\hat{d}$ est la sortie du modèle local ;
$\varepsilon$ est un seuil minimal prédéterminé ;
max(...) est l'opérateur « maximum » ;
$\delta_i$ est la i-ème valeur du vecteur $\delta$ ;

$\hat{\delta_i}$ est la i-ème valeur du vecteur $\hat{\delta}$ ;

$E$(...) est l'opérateur « partie entière » ;
$\rho$ est un réel positif prédéterminé inférieur ou égal à 1 ; et
$M$ est la taille de chacun des vecteurs $\delta$ et $\hat{\delta}$ ;
la perte de régularisation vaut :

$$L_R(R) = \frac{1}{M} \sum_{k=1}^{K} \sum_{i=1}^{k} \left| \nabla_x R_i^k \right| + \left| \nabla_y R_i^k \right|$$

avec :

$$R_i = \delta_i - \hat{\delta_i}$$

$$\delta = \frac{d}{\max(\max(d), \varepsilon)}$$

$$\hat{\delta} = \frac{\hat{d}}{\max(\max(\hat{d}), \varepsilon)}$$

où :

$L_R$ est la perte de régularisation ;
$d$ est la carte de profondeur locale ;
$\hat{d}$ est la sortie du modèle local ;
$\varepsilon$ est un seuil minimal prédéterminé ;
max(...) est l'opérateur « maximum » ;
$\delta_i$ est la i-ème valeur du vecteur $\delta$ ;

$\hat{\delta_i}$ est la i-ème valeur du vecteur $\hat{\delta}$ ;

$K$ est une nombre de niveaux de résolution de l'image locale ;
$\nabla_x$ est une dérivée spatiale suivant une première direction ;
$\nabla_y$ est une dérivée spatiale suivant une deuxième direction distincte de la première direction ; et
$M$ est la taille de chacun des vecteurs $\delta$ et $\hat{\delta}$ ;
la fonction de perte est égale à :

$$L_\alpha = L_I + \alpha L_R$$

où :

$L_\alpha$ est la fonction de perte ;
$L_I$ est l'invariant d'échelle et de décalage ajusté ;
$L_R$ est la perte de régularisation ; et
$\alpha$ est un coefficient réel prédéterminé ;
le procédé comprend, pour au moins un noeud local, préalablement à l'entraînement du modèle local respectif :

- un calcul, à partir d'une scène tridimensionnelle prédéterminée, d'au moins une image de synthèse et, pour chaque image de synthèse, d'une carte de profondeur respective correspondante ;
- un ajout, dans le jeu de données d'entraînement local respectif, de chaque image de synthèse et de la carte de profondeur respective, en tant que couple d'entraînement.

Selon un autre aspect de l'invention, il est proposé un programme d'ordinateur comprenant des instructions exécutables qui, lorsqu'elles sont exécutées par ordinateur, mettent en oeuvre les étapes du procédé tel que défini ci-dessus.

Le programme d'ordinateur peut être en tout langage informatique, tel que par exemple en langage machine, en C, C++, JAVA, Python, etc.

*- > Dispositif ou procédé*

Selon un autre aspect de l'invention, il est proposé un dispositif d'estimation de profondeur, comprenant une unité de traitement et une mémoire,

la mémoire étant configurée pour stocker un modèle d'estimation de profondeur préalablement obtenu par la mise en oeuvre des étapes :

- pour chacun parmi N noeuds locaux, N étant un entier naturel non nul, entraînement d'un modèle local respectif, sur la base d'un jeu de données d'entraînement local respectif, chaque modèle local étant une copie d'un même modèle d'estimation de profondeur initial,

  chaque jeu de données d'entraînement local comprenant une pluralité de couples d'entraînement, chaque couple d'entraînement comportant :

  • une image locale, représentative d'une scène correspondante ; et
  • une carte de profondeur locale respective, formant une sortie attendue du modèle local pour ladite image locale en tant qu'entrée, chaque carte de profondeur locale présentant, pour chaque pixel de l'image locale respective, une valeur indicative d'une profondeur, dans la scène correspondante, du point de ladite scène associé audit pixel,

  un résultat de l'entraînement formant un modèle local entraîné respectif ; et

- calcul du modèle d'estimation de profondeur à partir de toute ou partie des modèles locaux entraînés ;

l'unité de traitement étant configurée pour :

- fournir, en entrée d'un modèle d'estimation de profondeur, une image d'entrée représentative d'une scène d'entrée,
  une sortie du modèle d'estimation de profondeur formant une carte de profondeur comprenant, pour chaque pixel de l'image d'entrée, une valeur indicative d'une profondeur, dans la scène d'entrée, du point de la scène d'entrée associé audit pixel ; et

- écrire, dans la mémoire, la carte de profondeur obtenue, en association avec l'image d'entrée.

Le dispositif selon l'invention peut être tout type d'appareil tel qu'un serveur, un ordinateur, une tablette, un calculateur, un processeur, une puce informatique, programmé pour mettre en oeuvre le procédé selon l'invention, par exemple en exécutant le programme d'ordinateur selon l'invention.

**Brève description des figures**

L'invention sera mieux comprise à la lecture de la description qui va suivre, donnée uniquement à titre d'exemple non limitatif et faite en se référant aux dessins annexés sur lesquels :

la figure 1 est une représentation schématique d'une infrastructure informatique selon l'invention ;

la figure 2 est un ordinogramme d'un procédé d'estimation de profondeur selon l'invention ;

la figure 3 est un exemple d'image représentative d'une scène ;

la figure 4 est une carte de profondeur réelle correspondant à l'image de la figure 3 ;

la figure 5 est une carte de profondeur correspondant à l'image de la figure 3, et obtenue au moyen d'un modèle d'estimation de profondeur avant une étape d'entraînement du procédé de la figure 2 ; et

la figure 6 est une carte de profondeur correspondant à l'image de la figure 3, et obtenue au moyen d'un modèle d'estimation de profondeur après la mise en oeuvre de l'étape d'entraînement du procédé de la figure 2.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieure. Cette sélection comprend au moins une caractéristique de préférence fonctionnelle sans détails structurels, ou avec seulement une partie des détails structurels si c'est cette partie qui est uniquement suffisante pour conférer un avantage technique ou pour différencier l'invention par rapport à l'état de la technique antérieure.

En particulier toutes les variantes et tous les modes de réalisation décrits sont combinables entre eux si rien ne s'oppose à cette combinaison sur le plan technique.

Sur les figures et dans la suite de la description, les éléments communs à plusieurs figures conservent la même référence.

## Description détaillée

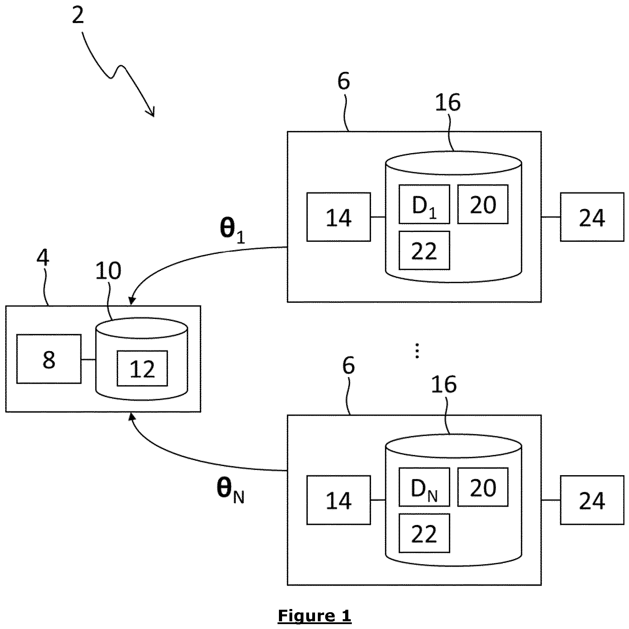

Une infrastructure informatique 2 selon l'invention est illustrée par la figure 1.

Comme représenté sur cette figure, l'infrastructure informatique 2 comprend un noeud central 4.

L'infrastructure informatique 2 comporte en outre N noeuds locaux 6, N étant un entier naturel non nul. Chaque noeud local 6 est connecté au noeud central 4 par l'intermédiaire de tout moyen de communication approprié.

Le noeud central 4 comprend une unité de traitement centrale 8 et une mémoire centrale 10 en communication entre elles.

En particulier, la mémoire centrale 10 est configurée pour stocker un modèle d'estimation de profondeur 12.

En outre, chaque noeud local 6 comprend une unité de traitement locale 14 et une mémoire locale 16 en communication entre elles.

En particulier, pour chaque noeud local 6, la mémoire locale 16 respective est configurée pour stocker un jeu de données d'entraînement local $D_i$ respectif (i étant compris entre 1 et N). En outre, la mémoire locale 16 est configurée pour stocker un modèle local 20 et un modèle local entraîné 22 respectifs.

De préférence, au moins un noeud local 6 est associé à une unité de rendu 24 configurée pour exécuter un moteur 3D. Selon une variante, une même unité de rendu 24 est associée à une pluralité de noeuds locaux 6.

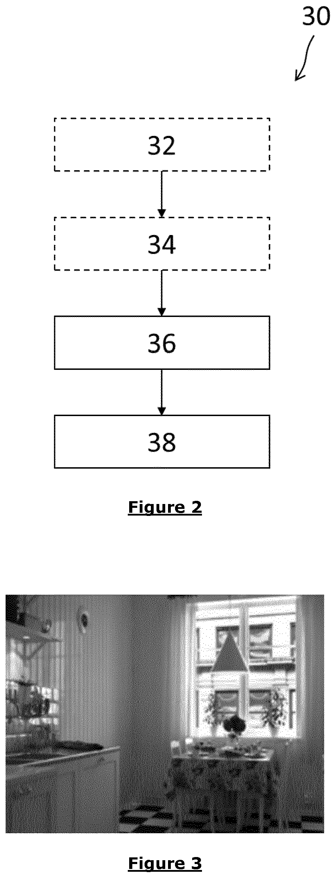

L'infrastructure informatique 2 est configurée pour mettre en oeuvre un procédé 30 d'estimation de profondeur (figure 2).

Les caractéristiques de chaque élément 4, 6 de l'infrastructure informatique 2 ressortiront plus clairement de la description dudit procédé 30 d'estimation de profondeur.

Comme illustré par la figure 2, le procédé 30 d'estimation de profondeur comprend une étape 36 de calcul d'une carte de profondeur (dite « étape de calcul ») et une étape d'enregistrement 38.

De façon avantageuse, le procédé 30 d'estimation de profondeur comprend également une étape 34 d'obtention du modèle d'estimation de profondeur 12 (dite « étape d'obtention »), antérieure à l'étape de calcul 36.

De préférence, dans ce cas, le procédé 30 d'estimation de profondeur comprend également une étape 32 de génération de jeux d'entraînement (dite « étape de génération »), antérieure à l'étape d'obtention 34.

### Etape de génération 32

De préférence, chaque noeud local 6 est configuré pour, au cours de l'étape de génération 32, enregistrer, dans la mémoire locale 16 correspondante, le jeu de données d'entraînement local $D_i$ respectif.

Pour chaque noeud local 6, le jeu de données d'entraînement local $D_i$ respectif comprend une pluralité de couples d'entraînement, chacun comportant une image (dite « image locale ») et une carte de profondeur respective (dite « carte de profondeur locale »).

Plus précisément, chaque image locale est représentative d'une scène (réelle ou virtuelle) vue depuis un point d'observation. En outre, la carte de profondeur locale associée à ladite image locale comprend, pour chaque pixel de l'image locale, une valeur de profondeur indicative d'une profondeur, dans la scène représentée sur l'image locale, du point de ladite scène associé audit pixel, c'est-à-dire une distance par rapport au point d'observation.

Un exemple d'une telle image est illustré par la figure 3.

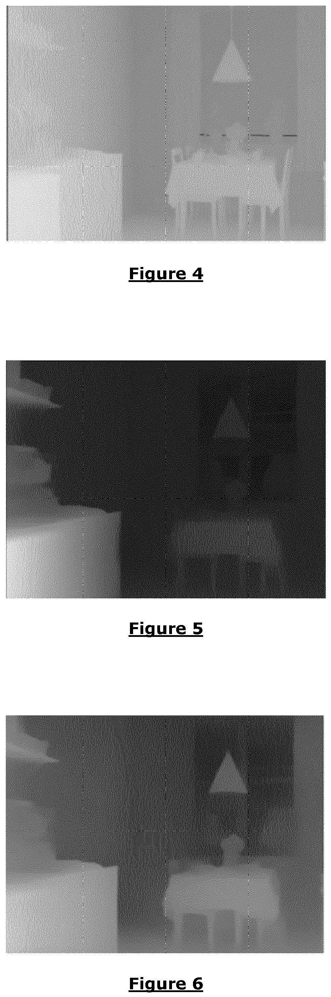

En outre, la figure 4 correspond à la carte de profondeur associée à l'image de la figure 3. Plus précisément, les zones de l'image associées aux objets les plus proches du point d'observation correspondent aux zones les plus claires de la carte de profondeur de la figure 4.

À titre d'exemple, au moins une image locale est une image réelle, notamment issue d'une banque d'images réelles prédéterminée comprenant, pour chaque image réelle, la carte de profondeur correspondante. Une telle banque d'images réelles est, par exemple, la banque d'images DIODE, ou encore la banque d'images NYUv2.

La banque d'images DIODE est décrite par Igor Vasiljevic et al. dans la prépublication digitale « DIODE: A Dense Indoor and Outdoor DEpth Dataset », référencée arXiv:1908.00463. La banque d'images DIODE comprend des images représentatives de scènes intérieures et extérieures.

En outre, la banque d'images NYUv2 est décrite par Nathan Silberman et al. dans la publication digitale « Indoor Segmentation and Support Inference from RGBD Images », référencée Computer Vision - ECCV 2012, Lecture Notes in Computer Science, vol 7576. La banque d'images NYUv2 comprend des images représentatives d'environnements intérieurs.

En variante, ou de façon complémentaire, au moins une image locale est une image de synthèse, par exemple issue d'une banque d'images de synthèse prédéterminée comprenant, pour chaque image de synthèse, la carte de profondeur correspondante. Une telle banque d'images de synthèse est, par exemple, la banque d'images Hypersim.

La banque d'images Hypersim est décrite par Mike Roberts et al. dans la prépublication digitale « Hypersim: A Photorealistic Synthetic Dataset for Holistic Indoor Scene Understanding », référencée ar-Xiv:2011.02523.

En variante, ou de façon complémentaire, au moins une image locale est une image de synthèse générée au moyen d'une unité de rendu 24.

Dans ce cas, pour chaque noeud local 6 associé à une unité de rendu 24, l'unité de rendu 24 correspondante est configurée pour mettre en oeuvre le moteur 3D afin de calculer, au cours de l'étape de génération 32, au moins une image de synthèse à partir d'au moins une scène tridimensionnelle prédéterminée. Par exemple, chaque scène tridimensionnelle a été préalablement modélisée par un utilisateur.

Dans ce cas, chaque image locale est représentative de la scène tridimensionnelle vue depuis un point d'observation virtuel correspondant.

En outre, l'unité de rendu 24 est configurée pour générer, pour chaque image de synthèse calculée, la carte de profondeur respective.

De préférence, l'unité de rendu 24 est configurée pour normaliser la carte de profondeur générée, de sorte que chaque valeur de profondeur soit un réel positif compris entre 0 et 1.

Une telle normalisation correspond à une étape dans laquelle les valeurs d'une carte de profondeur données sont divisées par la plus grande valeur de ladite carte de profondeur. Il en résulte que le point de la plus éloigné par rapport au point d'observation virtuel, dans la scène tridimensionnelle, est associé à la valeur 1.

De préférence, pour chaque noeud local 6, l'unité de traitement locale 14 est configurée de façon à normaliser, au cours de l'étape de génération 32, chaque carte de profondeur de chaque couple d'entraînement du jeu de données d'entraînement local correspondant. Il en résulte qu'à l'issue de l'exécution de l'étape de génération, chaque valeur de profondeur est un réel positif compris entre 0 et 1 (la valeur 1 étant associée au point le plus éloigné vis-à-vis du point d'observation, dans chaque scène).

Il en résulte qu'un modèle d'estimation de profondeur entraîné sur la base de telles cartes de profondeurs normalisées conduit à une estimation de profondeur relative (par opposition à une estimation de profondeur absolue, indiquant la distance réelle entre l'objet considéré et le point d'observation).

*Etaoe d'obtention 34*

De préférence, pour chaque noeud local 6, l'unité de traitement locale 14 est configurée pour, au cours de l'étape d'obtention 34, entraîner un modèle local 20 respectif, sur la base d'un jeu de données d'entraînement local $D_i$ respectif.

Chaque modèle local 20 est une copie d'un même modèle d'estimation de profondeur initial. En outre, chaque modèle local 20 est stocké dans le noeud local 6 respectif.

Par exemple, le modèle d'estimation de profondeur initial est le modèle MiDaS, décrit par Peiner Birkl et al. dans la prépublication digitale « MiDaS v3.1 -- A Model Zoo for Robust Monocular Relative Depth Estimation », référencée arXiv:2307.14460.

La figure 5 correspond à la carte de profondeur calculée par un tel modèle pré-entraîné pour l'image de la figure 3 en tant qu'entrée. Il ressort de cette figure que les performances du modèle sont insuffisantes, les profondeurs estimées étant très différentes de celles de la carte de profondeur de référence (figure 4).

Plus précisément, au cours de l'entraînement, pour chaque couple d'entraînement, la carte de profondeur locale respective forme une sortie attendue du modèle local 20 pour l'image locale respective prise en tant qu'entrée dudit modèle local 20.

Avantageusement, dans ce cas, l'unité de traitement locale 14 est configurée pour mettre en oeuvre une fonction de perte comprenant un invariant d'échelle et de décalage ajusté et une perte de régularisation. Une telle fonction de perte est particulièrement adaptée pour l'estimation de profondeur relative.

En particulier, la fonction de perte est égale à :

$$L_\alpha = L_I + \alpha L_R$$

où :

$L_\alpha$ est la fonction de perte ;
$L_I$ est l'invariant d'échelle et de décalage ajusté ;
$L_R$ est la perte de régularisation ; et
$\alpha$ est un coefficient réel prédéterminé (par exemple égal à 1000, valeur estimée expérimentalement comme étant optimale).

Avantageusement, l'invariant d'échelle et de décalage ajusté vaut, pour chaque image locale :

$$L_I\big(\delta, \hat{\delta}\big) = \sum_{j=1}^{U_M} \big|\delta_j - \widehat{\delta}_j\big|$$

avec :

$$\forall j \in [\![1, M]\!], \big|\delta_j - \widehat{\delta_j}\big| < \big|\delta_{j+1} - \widehat{\delta_{j+1}}\big|$$

$$U_M = E(\rho M)$$

$$\delta = \frac{d}{\max(\max(d), \varepsilon)}$$

$$\hat{\delta} = \frac{\hat{d}}{\max(\max(\hat{d}), \varepsilon)}$$

où :

$L_l$ est l'invariant d'échelle et de décalage ajusté ;

d est la carte de profondeur locale ;

$\hat{d}$ est la sortie du modèle local 20 ;

$\varepsilon$ est un seuil minimal prédéterminé (par exemple égal à $10^{-12}$) ;

max(...) est l'opérateur « maximum » ;

$\delta_i$ est la i-ème valeur du vecteur $\delta$ ;

$\widehat{\delta_i}$ est la i-ème valeur du vecteur $\hat{\delta}$ ;

H(...) est l'opérateur « partie entière » ;

$\rho$ est un réel positif prédéterminé inférieur ou égal à 1 (par exemple égal à 0,8) ; et

M est la taille de chacun des vecteurs $\delta$ et $\hat{\delta}$.

Avantageusement, la perte de régularisation vaut, pour chaque image locale :

$$L_R(R) = \frac{1}{M} \sum_{k=1}^{K} \sum_{i=1}^{k} \left| \nabla_x R_i^k \right| + \left| \nabla_y R_i^k \right|$$

avec :

$$R_i = \delta_i - \widehat{\delta_i}$$

où :

$L_R$ est la perte de régularisation ;

K est un nombre de niveaux de résolution de l'image locale (par exemple égal à 4) ;

$\nabla_x$ est une dérivée spatiale suivant une première direction ;

$\nabla_y$ est une dérivée spatiale suivant une deuxième direction distincte de la première direction.

Il en résulte, pour chaque noeud local 6, à l'issue de l'entraînement, un modèle local entraîné 22 respectif, résultat de l'entraînement du modèle local 20 sur la base du jeu de données d'entraînement local $D_i$ respectif. En d'autres termes, les modèles locaux entraînés 22 présentent la même architecture d'un noeud local 6 à l'autre, mais diffèrent par les valeurs $\theta_i$ de leurs coefficients.

En outre, chaque noeud local 6 est configuré pour, à l'issue de l'entraînement, transférer le modèle local entraîné 22 correspondant vers le noeud central 4.

Plus précisément, chaque noeud local 6 est configuré pour transférer, vers le noeud central 4, l'ensemble $\theta_i$ des valeurs prises par les coefficients du modèle local entraîné 22 respectif.

En outre, l'unité de traitement centrale 8 est configurée pour calculer le modèle d'estimation de profondeur 12 à partir de chaque modèle local entraîné 22 reçu, et plus spécifiquement à partir des valeurs $\theta_i$ des coefficients de chaque modèle local entraîné 22.

Plus précisément, l'unité de traitement centrale 8 est configurée pour agréger les modèles locaux entraînés 22 reçus afin d'obtenir le modèle d'estimation de profondeur 12.

De préférence, dans ce cas, l'unité de traitement centrale 8 est configurée pour calculer le modèle d'estimation de profondeur 12 comme une moyenne pondérée des modèles locaux 22 entraînés. En d'autres termes, chaque coefficient du modèle d'estimation de profondeur 12 présente une valeur égale à la moyenne des valeurs des coefficients correspondants des modèles locaux entraînés 22. Un tel calcul sous-entend que le modèle d'estimation de profondeur 12 présente la même architecture que les modèles locaux entraînés 22 (et donc que les modèles locaux 20).

De préférence, un coefficient de pondération associé à chaque modèle local entraîné 22 dépend de la taille du jeu de données d'entraînement local $D_i$ respectif.

La figure 6 correspond à la carte de profondeur calculée par un tel modèle entraîné, pour l'image de la figure 3 en tant qu'entrée. Il ressort de cette figure que les performances du modèle entraîné selon le procédé de l'invention sont meilleures que celles du modèle initial, les profondeurs estimées se rapprochant davantage de celles de la carte de profondeur de référence (figure 4).

### Etaoe de calcul 36

L'unité de traitement centrale 8 est, en outre, configurée pour, au cours de l'étape de calcul 36, fournir, en entrée du modèle d'estimation de profondeur 12, une image d'entrée représentative d'une scène, dite « scène d'entrée ».

Dans ce cas, une sortie du modèle d'estimation de profondeur forme une carte de profondeur comprenant, pour chaque pixel de l'image d'entrée, une valeur indicative d'une profondeur, dans la scène d'entrée, du point de la scène d'entrée associé audit pixel.

### Etaoe d'enregistrement 38

L'unité de traitement centrale 8 est, en outre, configurée pour, au cours de l'étape d'enregistrement 38, enregistrer, dans la mémoire centrale 10, la carte de profondeur obtenue, en association avec l'image d'entrée.

### Fonctionnement

Le fonctionnement de l'infrastructure informatique 2 va maintenant être décrit en référence à la figure 2.

De préférence, au cours de l'étape de génération 32, chaque noeud local 6 enregistre, dans la mémoire locale 16 respective, le jeu de données d'entraînement local $D_i$ respectif, comprenant des images réelles et/ou de synthèse, chacune associée à la carte de profondeur correspondante.

Par exemple, au moins une image de synthèse a été préalablement générée depuis une scène tridimensionnelle créée au moyen d'un moteur 3D exécuté sur une unité de rendu 24.

En outre, de préférence, pour chaque noeud local 6, l'unité de traitement locale 14 respective normalise chaque carte de profondeur de chaque couple d'entraînement du jeu de données d'entraînement local $D_i$ respectif.

Puis, de préférence, au cours de l'étape d'obtention 34, pour chaque noeud local 6, l'unité de traitement locale 14 correspondante entraîne le modèle local 20 respectif, sur la base d'un jeu de données d'entraînement local $D_i$ respectif.

Il en résulte, pour chaque noeud local 6, à l'issue de l'entraînement, un modèle local entraîné 22 respectif.

Puis, à l'issue de l'entraînement, chaque noeud local 6 transfère le modèle local entraîné 22 correspondant vers le noeud central 4.

Puis, l'unité de traitement centrale 8 du noeud central calculer le modèle d'estimation de profondeur 12 à partir de chaque modèle local entraîné 22 reçu.

Puis, au cours de l'étape de calcul 36, l'unité de traitement centrale 8 fournit, en entrée du modèle d'estimation de profondeur 12, une image d'entrée représentative d'une scène d'entrée.

Dans ce cas, une sortie du modèle d'estimation de profondeur 12 forme la carte de profondeur calculée pour ladite image d'entrée.

Puis, au cours de l'étape d'enregistrement 38, l'unité de traitement centrale 8, enregistrer, dans la mémoire centrale 10, la carte de profondeur obtenue, en association avec l'image d'entrée.

Bien entendu l'invention n'est pas limitée aux exemples qui viennent d'être décrits.

## Revendications

1. Procédé (30) d'estimation de profondeur, le procédé étant mis en oeuvre par ordinateur et comprenant les étapes :

   - fourniture (36), en entrée d'un modèle d'estimation de profondeur (12), d'une image d'entrée représentative d'une scène d'entrée, une sortie du modèle d'estimation de profondeur formant une carte de profondeur comprenant, pour chaque pixel de l'image d'entrée, une valeur indicative d'une profondeur, dans la scène d'entrée, du point de la scène d'entrée associé audit pixel ; et
   - enregistrement (38), dans une mémoire (10), de la carte de profondeur obtenue, en association avec l'image d'entrée,

   le modèle d'estimation de profondeur (12) ayant été préalablement obtenu par la mise en oeuvre des étapes :

   - pour chacun parmi N noeuds locaux, N étant un entier naturel non nul, entraînement (32) d'un modèle local (20) respectif, sur la base d'un jeu de données d'entraînement local ($D_1$, $D_N$) respectif, chaque modèle local (20) étant une copie d'un même modèle d'estimation de profondeur initial,

   chaque jeu de données d'entraînement local comprenant une pluralité de couples d'entraînement, chaque couple d'entraînement comportant :

   • une image locale, représentative d'une scène correspondante ; et
   • une carte de profondeur locale respective, formant une sortie attendue du modèle local (20) pour ladite image locale en tant qu'entrée, chaque carte de profondeur locale présentant, pour chaque pixel de l'image locale respective, une valeur indicative d'une profondeur, dans la scène correspondante, du point de ladite scène associé audit pixel,

   un résultat de l'entraînement formant un modèle local entraîné (22) respectif ;

   - calcul (34) du modèle d'estimation de profondeur (12) à partir de toute ou partie des modèles locaux entraînés (22).

2. Procédé selon la revendication 1, dans lequel le modèle d'estimation de profondeur (12) est égal à une moyenne pondérée des modèles locaux entraînés (22),
   un coefficient de pondération associé à chaque modèle local entraîné (22) dépendant de la taille du jeu de données d'entraînement local ($D_1$, $D_N$) respectif.

3. Procédé selon la revendication 1 ou 2, dans lequel, pour chaque noeud local (6), l'obtention du modèle local entraîné (22) respectif comprend la mise en oeuvre d'une fonction de perte comprenant d'une part, un invariant d'échelle et de décalage ajusté et, d'autre part, une perte de régularisation.

4. Procédé selon la revendication 3, dans lequel l'invariant d'échelle et de décalage ajusté vaut :

$$L_I\left(\delta, \hat{\delta}\right) = \sum_{j=1}^{U_M} \left|\delta_j - \widehat{\delta}_j\right|$$

avec :

$$\forall j \in [\![1, M]\!], \left| \delta_j - \widehat{\delta_j} \right| < \left| \delta_{j+1} - \widehat{\delta_{j+1}} \right|$$

$$U_M = E(\rho M)$$

$$\delta = \frac{d}{\max(\max(d), \varepsilon)}$$

$$\hat{\delta} = \frac{\hat{d}}{\max(\max(\hat{d}), \varepsilon)}$$

où :

$L_I$ est l'invariant d'échelle et de décalage ajusté ;
d est la carte de profondeur locale ;
$\hat{d}$ est la sortie du modèle local ;
$\varepsilon$ est un seuil minimal prédéterminé ;
max(...) est l'opérateur « maximum » ;
$\delta_i$ est la i-ème valeur du vecteur $\delta$ ;

$\widehat{\delta_i}$ est la i-ème valeur du vecteur $\hat{\delta}$ ;

H(...) est l'opérateur « partie entière » ;
$\rho$ est un réel positif prédéterminé inférieur ou égal à 1 ; et
M est la taille de chacun des vecteurs $\delta$ et $\hat{\delta}$.

**5.** Procédé selon la revendication 3 ou 4, dans lequel la perte de régularisation vaut :

$$L_R(R) = \frac{1}{M} \sum_{k=1}^{K} \sum_{i=1}^{k} \left| \nabla_x R_i^k \right| + \left| \nabla_y R_i^k \right|$$

avec :

$$R_i = \delta_i - \widehat{\delta_i}$$

$$\delta = \frac{d}{\max(\max(d), \varepsilon)}$$

$$\hat{\delta} = \frac{\hat{d}}{\max(\max(\hat{d}), \varepsilon)}$$

où :

$L_R$ est la perte de régularisation ;
d est la carte de profondeur locale ;
$\hat{d}$ est la sortie du modèle local ;
$\varepsilon$ est un seuil minimal prédéterminé ;

max(...) est l'opérateur « maximum » ;
$\delta_i$ est la i-ème valeur du vecteur $\delta$ ;

$\widehat{\delta_i}$ est la i-ème valeur du vecteur $\hat{\delta}$ ;

K est une nombre de niveaux de résolution de l'image locale ;
$\nabla_x$ est une dérivée spatiale suivant une première direction ;
$\nabla_y$ est une dérivée spatiale suivant une deuxième direction distincte de la première direction ; et
M est la taille de chacun des vecteurs $\delta$ et $\hat{\delta}$.

**6.** Procédé selon l'une quelconque des revendications 3 à 5, dans lequel la fonction de perte est égale à :

$$L_\alpha = L_I + \alpha L_R$$

où :

$L_\alpha$ est la fonction de perte ;
$L_I$ est l'invariant d'échelle et de décalage ajusté ;
$L_R$ est la perte de régularisation ; et
$\alpha$ est un coefficient réel prédéterminé.

**7.** Procédé selon l'une quelconque des revendications 1 à 6, comprenant, pour au moins un noeud local, préalablement à l'entraînement du modèle local respectif :

- un calcul, à partir d'une scène tridimensionnelle prédéterminée, d'au moins une image de synthèse et, pour chaque image de synthèse, d'une carte de profondeur respective correspondante ;
- un ajout, dans le jeu de données d'entraînement local respectif, de chaque image de synthèse et de la carte de profondeur respective, en tant que couple d'entraînement.

**8.** Programme d'ordinateur comprenant des instructions exécutables qui, lorsqu'elles sont exécutées par ordinateur, mettent en en oeuvre les étapes du procédé selon l'une quelconque des revendications 1 à 7.

**9.** Dispositif d'estimation de profondeur, comprenant une unité de traitement (8) et une mémoire (10),

la mémoire (10) étant configurée pour stocker un modèle d'estimation de profondeur (12) préalablement obtenu par la mise en oeuvre des étapes :

- pour chacun parmi N noeuds locaux (6), N étant un entier naturel non nul, entraînement (32) d'un modèle local (20) respectif, sur la base d'un jeu de données d'entraîne-

ment local ($D_1$, $D_N$) respectif, chaque modèle local (20) étant une copie d'un même modèle d'estimation de profondeur initial,

chaque jeu de données d'entraînement local comprenant une pluralité de couples d'entraînement, chaque couple d'entraînement comportant :

• une image locale, représentative d'une scène correspondante ; et
• une carte de profondeur locale respective, formant une sortie attendue du modèle local (20) pour ladite image locale en tant qu'entrée,
chaque carte de profondeur locale présentant, pour chaque pixel de l'image locale respective, une valeur indicative d'une profondeur, dans la scène correspondante, du point de ladite scène associé audit pixel,

un résultat de l'entraînement formant un modèle local entraîné (22) respectif ; et

- calcul (34) du modèle d'estimation de profondeur (12) à partir de toute ou partie des modèles locaux entraînés (22) ;

l'unité de traitement (8) étant configurée pour :

- fournir (36), en entrée d'un modèle d'estimation de profondeur (12), une image d'entrée représentative d'une scène d'entrée,
une sortie du modèle d'estimation de profondeur formant une carte de profondeur comprenant, pour chaque pixel de l'image d'entrée, une valeur indicative d'une profondeur, dans la scène d'entrée, du point de la scène d'entrée associé audit pixel ; et
- écrire (38), dans la mémoire (10), la carte de profondeur obtenue, en association avec l'image d'entrée.

**Figure 1**

30

**Figure 2**

**Figure 3**

**Figure 4**

**Figure 5**

**Figure 6**

Europäisches Patentamt

European Patent Office

Office européen des brevets

# RAPPORT DE RECHERCHE EUROPEENNE

Numéro de la demande

EP 24 30 6984

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | De S. Soares Elton F. ET AL: "Federated Self-Supervised Learning of Monocular Depth Estimators for Autonomous Vehicles", , 7 octobre 2023 (2023-10-07), XP093275056, DOI: 10.48550/arXiv.2310.04837 Extrait de l'Internet: URL:https://arxiv.org/abs/2310.04837 [extrait le 2025-05-07] | 1,2,7-9 | INV. G06T7/50 |
| Y | * le document en entier * ----- | 3-6 | |
| Y,D | REINER BIRKL ET AL: "MiDaS v3.1 -- A Model Zoo for Robust Monocular Relative Depth Estimation", ARXIV.ORG, CORNELL UNIVERSITY LIBRARY, 201 OLIN LIBRARY CORNELL UNIVERSITY ITHACA, NY 14853, 26 juillet 2023 (2023-07-26), XP091575473, * le document en entier * ----- | 3-6 | |
| T | RANFTL RENE ET AL: "Towards Robust Monocular Depth Estimation: Mixing Datasets for Zero-Shot Cross-Dataset Transfer", IEEE TRANSACTIONS ON PATTERN ANALYSIS AND MACHINE INTELLIGENCE, vol. 44, no. 3, mars 2022 (2022-03), pages 1623-1637, XP093223980, USA ISSN: 0162-8828, DOI: 10.1109/TPAMI.2020.3019967 * le document en entier * ----- | | DOMAINES TECHNIQUES RECHERCHES (IPC) G06T |

Le présent rapport a été établi pour toutes les revendications

| Lieu de la recherche | Date d'achèvement de la recherche | Examinateur |
|---|---|---|
| Munich | 7 mai 2025 | Werling, Alexander |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
...........................................................................
& : membre de la même famille, document correspondant

EPO FORM 1503 03.82 (P4C02)

## RÉFÉRENCES CITÉES DANS LA DESCRIPTION

**Littérature non-brevet citée dans la description**

- **IGOR VASILJEVIC et al.** DIODE: A Dense Indoor and Outdoor DEpth Dataset. *arXiv:1908.00463*
- **NATHAN SILBERMAN et al.** Indoor Segmentation and Support Inference from RGBD Images. *Computer Vision - ECCV 2012, Lecture Notes in Computer Science*, vol. 7576
- **MIKE ROBERTS et al.** Hypersim: A Photorealistic Synthetic Dataset for Holistic Indoor Scene Understanding. *arXiv:2011.02523*
- **PEINER BIRKL et al.** MiDaS v3.1 -- A Model Zoo for Robust Monocular Relative Depth Estimation. *arXiv:2307.14460*